# EUROPÄISCHE PATENTSCHRIFT

(11) **EP 0 844 976 B1**
(45) Veröffentlichungstag und Bekanntmachung des Hinweises auf die Patenterteilung: **13.12.2000**
(21) Anmeldenummer: 97929211.7
(22) Anmeldetag: 18.06.1997
(51) Int. Cl.: B65H 23/038, B65G 39/16

(54) **VORRICHTUNG ZUM VERSCHWENKEN EINER WALZE FÜR EINE LAUFENDE BAHN**
DEVICE FOR PIVOTING A ROLLER FOR A MOVING WEB
DISPOSITIF SERVANT AU PIVOTEMENT D'UN ROULEAU POUR UNE BANDE EN MOUVEMENT

(30) Priorität: 20.06.1996 DE 19624639
(43) Veröffentlichungstag der Anmeldung: 03.06.1998
(73) Patentinhaber: ERHARDT + LEIMER GmbH, D-86157 Augsburg (DE)
(72) Erfinder: WULF, Johannes, D-33335 Gütersloh (DE); NIEMAN, Heinrich, D-32130 Enger (DE)
(74) Vertreter: Sasse, Volker, Dipl.-Ing.
(86) Internationale Anmeldenummer: EP9703178
(87) Internationale Veröffentlichungsnummer: WO9748633

(56) Entgegenhaltungen:
- DE-A- 2 540 923
- DE-A- 2 549 886
- DE-C- 4 335 747
- US-A- 3 399 582
- US-A- 5 467 171

## Beschreibung

Die Erfindung betrifft eine Vorrichtung zum Verschwenken einer Walze für eine laufende Bahn, insbesondere eine Papier- oder Folienbahn, mit einem an einem Walzenende angreifenden Stellantrieb, der mit einem dessen Stellbewegung zum Walzengegenende gegensinnig übertragenden Mechanismus in Wirkverbindung steht, der von einer zumindest teilweise in der Walze vorgesehenen, vom Stellantrieb um ihre Längsachse in Drehung versetzbaren Welle gebildet ist.

Aus der DE 25 40 923 A1 ist eine verschwenkbare Walze zum Führen eines Endlosbandes bekannt. Die Walze wird an beiden Enden von je einem Stellantrieb erfaßt, wobei die Stellantriebe synchron gegensinnig angesteuert werden. Hierdurch wird erreicht, daß die Walze um ihren Mittelpunkt schwenkt, wodurch einseitige Bahnlängenänderungen vermieden werden. Die Anwendung zweier Stellantriebe für eine Walze ist jedoch kostenaufwendig, wobei die Stellantriebe durch weitere Regelungen miteinander synchronisiert werden müssen.

Aus der DE 14 74 226 A1 ist eine weitere Vorrichtung zum Verschwenken einer Walze bekannt. Ein einziger Stellantrieb wirkt direkt auf ein Walzenende ein, wobei der Stellhub über Winkelhebel und eine Schubstange gegensinnig auf das Gegenende der Walze übertragen wird. Auf diese Weise wird erreicht, daß unter Verwendung eines einzelnen Stellantriebs eine Verschwenkung der Walze um ihre Mitte erreicht wird, ohne aufwendige Schwenkrahmen einsetzen zu müssen. Diese Vorrichtung weist jedoch den Nachteil auf, daß die Winkelhebel und die Schubstange den Bahnlauf behindern können, so daß nur geringe Umschlingungswinkel der Bahn um die Walze realisierbar sind. Außerdem greifen Gelenkverbindungen der Winkelhebel in den Bahnlauf ein, so daß darin enthaltenes Fett die Bahn leicht verschmutzen kann. Ein Abdecken dieser Gelenkverbindungen hätte jedoch zur Folge, daß der Umschlingungswinkel der Bahn noch weiter eingeschränkt werden würde.

Aus der DE 43 35 747 C1 ist eine Vorrichtung zum Führen eines Bandes bekannt, die von einer einseitig gelagerten und vom Band umschlungenen Walze gebildet ist. In die Walze taucht eine drehbare Welle ein, die von einem Stellantrieb um ihre Längsachse drehbar ist. Die Welle steht über Exzentergetriebe mit der Walze derart in Wirkverbindung, daß die Drehbewegung der Welle in eine gegenläufige Stellbewegung der Walzenenden entlang von Kreisbahnen umgesetzt wird.

Aus der DE-AS 1 093 315 ist eine Vorrichtung zum Verschwenken einer Walze gemäß dem Oberbegriff des Anspruchs 1 bekannt, deren Enden in Kulissen geführt sind, die mit der Bahnlaufrichtung jeweils einen spitzen Winkel einschließen. Eines der Walzenenden ist durch einen Stellantrieb entlang der Kulisse verschiebbar, wobei das Walzengegenende eine in etwa gegenläufige Bewegung ausführt. Diese bekannte Schwenkvorrichtung hat jedoch den Nachteil, daß die Walze auch eine unerwünschte Seitenbewegung ausführt, die zu einem Bahnverlauf führt. Außerdem ist die gesamte Verschwenkvorrichtung erheblich breiter als die Bahn, was insbesondere bei Bahnbreiten von 12 bis 14 m, wie sie bei der Papierherstellung eingesetzt werden, zu erheblichen Platzproblemen führt. Außerdem ist der Schwenkwinkel der Walze durch die Kulissen begrenzt, wobei deren Verlängerung wegen der damit verbundenen Behinderung des Bahnlaufs unmöglich ist.

Der Erfindung liegt die Aufgabe zugrunde, eine Vorrichtung zum Verschwenken einer Walze zu schaffen, die ohne verschwenkbaren Rahmen unter Verwendung eines einzigen Stellantriebs ein Verschwenken der Walze um ihre Mitte ermöglicht, wobei der Bahnlauf durch die Vorrichtung nicht behindert und die Walze stabil gehalten wird.

Diese Aufgabe wird erfindungsgemäß dadurch gelöst, daß die Welle die Walze durchsetzt und mit einem die Drehbewegung in eine Schwenkbewegung der Welle übertragenden Getriebe gekoppelt ist.

Durch die die Walze durchsetzende Welle wird eine Übertragung der Stellbewegung des Stellantriebs zum Gegenende der Walze erreicht, ohne den Bahnlauf zu behindern. Durch diese Anordnung ergibt sich ein besonders kompakter Aufbau, so daß die einzelnen Walzen besonders dicht aufeinander folgen können. Durch den Stellantrieb wird die Welle um ihre Längsachse in Drehung versetzt. Hierdurch läßt sich die Stellbewegung des Stellantriebs besonders einfach und gleichzeitig exakt zum Gegenende der Welle übertragen. Insbesondere wird hierdurch der Schwenkwinkel der Walze in keiner Weise beschränkt. Gegenüber einer axialen Schubbewegung der Welle hat die Drehbewegung den besonderen Vorteil, daß in Längsrichtung der Welle gesehen, nur sehr wenig mehr Platz als die Walzenlänge benötigt wird. Dies ist insbesondere bei den in der Papier- und Folienherstellung üblichen langen Walzen mit mehr als 10 m Länge von Bedeutung. Die Walze ist vorteilhaft auf der Welle drehbar gelagert. Dies stellt sicher, daß die Welle stets zentral durch die Walze verläuft, so daß die Schwenkbewegung der Welle direkt auf die Walze übertragen wird. Diese Maßnahme hat außerdem den Vorteil, daß die Schwenkbewegung der Walze nicht durch die Welle beschränkt ist. Diese Schwenkvorrichtung kann daher auch bei Walzen mit kleinem Außendurchmesser eingesetzt werden. Das am Gegenende der Welle vorgesehene Getriebe überträgt die Drehbewegung der Welle in eine gegensinnig zum Stellantrieb gerichtete Bewegung des Walzengegenstandes. Die Walze kann daher direkt ohne weiteres Getriebe auf der Welle gelagert werden und wird auf diese Weise um ihren Mittelpunkt verschwenkt, wobei lediglich ein einziger Stellantrieb vorgesehen ist. Hierdurch reduziert sich auch der Aufwand in der Ansteuerung des Stellantriebs. Insbesondere entfallen Maßnahmen zur Synchronisierung der Stellantriebe an beiden Walzenenden. Da die Welle einerseits am Stellantrieb und andererseits am Getriebe abgestützt ist, ergibt sich ein stabiler Aufbau, der Schwingbewegungen der Walze verhindert.

Als Getriebe wird gemäß Anspruch 2 vorteilhaft ein Zahngetriebe eingesetzt. Ein Zahngetriebe ist besonders reibungsarm und erlaubt trotzdem die Übertragung hoher Stellkräfte, um ein rasches Verschwenken der Walze zu ermöglichen.

Gemäß Anspruch 3 ist es günstig, die Welle über ein Getriebe mit dem Stellantrieb zu koppeln. Durch dieses Getriebe ist es leicht möglich, die erforderlichen hohen Stellkräfte zum Verschwenken der Walze bei gleichzeitig geringen Stellhüben mit herkömmlichen Stellantrieben, wie beispielsweise Elektro- oder Hydraulikmotoren zu realisieren. Insbesondere beim Einsatz einer verschwenkbaren Walze zur Bahnlaufregelung sind hohe Verstellkräfte zur Erzielung kurzer Regelzeiten von entscheidender Bedeutung. Insbesondere bei schnell laufenden Elektromotoren ist die Verwendung von Zahngetrieben zur Realisierung einer ausreichenden Untersetzung vorteilhaft.

Gemäß Anspruch 4 wird vorgeschlagen, das Ende der Welle mit einem Zahnrad drehfest zu verbinden, an das der Stellantrieb angreift. Auf diese Weise ergibt sich eine kraftschlüssige und reibungsarme Kopplung zwischen dem Stellantrieb und der Welle.

Vorzugsweise greift der Stellantrieb gemäß Anspruch 5 über eine drehbar gelagerte Gewindespindel an das mit der Welle verbundene Zahnrad an. Auf diese Weise läßt sich mit wenigen Mitteln eine relativ starke Untersetzung des Stellantriebs realisieren. Die an der gegenüberliegenden Seite des Zahnrades vorgesehene feststehende Gewindespindel oder Zahnstange bildet für das Zahnrad ein Gegenlager, an dem es sich bei der Drehung durch den Stellantrieb abwälzt. Dies hat zur Folge, daß sich das Zahnrad während der Drehung entlang der Gewindespindeln verschiebt, so daß die mit ihr verbundene Welle verschwenkt wird. Auf diese überraschend einfache Weise wird eine Schwenkbewegung der Welle erzeugt, die zum Verschwenken der Walze genutzt werden kann. Vorzugsweise besitzt das Zahnrad eine Evolventenverzahnung, so daß es sich an den Gewindespindeln bzw. an der Zahnstange ohne zu gleiten abwälzt. Dies vermindert die auftretenden Reibungskräfte und verringert damit die erforderliche Zeit zur Durchführung einer Stellbewegung der Welle.

Für das am Wellengegenende angreifende Getriebe hat sich gemäß Anspruch 6 ein drehfest mit der Welle verbundenes Zahnrad bewährt, das mit einer feststehenden Gewindespindel oder Zahnstange kämmt. Dabei liegen die jeweils feststehenden Gewindespindeln bzw. Zahnstangen an beiden Enden der Welle einander diagonal gegenüber. Durch diese überraschend einfache Anordnung ergibt sich eine zuverlässig arbeitende gegensinnige Kopplung der Bewegungen beider Wellenenden, so daß die Welle während der Stellbewegung des Stellantriebs um ihren Mittelpunkt verschwenkt wird. In diesem Fall kann die Schwenkbewegung der Welle direkt zum Verschwenken der Walze ausgenutzt werden.

Um unkontrollierte Schwenkbewegungen der Welle um andere, als die vorgegebene Schwenkachse zu vermeiden, ist es gemäß Anspruch 7 günstig, die Welle über ein Wälzlager an einer Kulisse abzustützen. Die Kulisse verläuft dabei vorzugsweise parallel zu den Gewindespindeln bzw. Zahnstangen. Dies hat den weiteren Vorteil, daß der gegenseitige Abstand zwischen der Zahnradachse und den Gewindespindeln bzw. Zahnstangen konstant gehalten wird, was wiederum ein Verkanten der Zähne verhindert.

Gemäß Anspruch 8 ist es vorteilhaft, die Vorrichtung zur Bahnlaufregelung zu verwenden. Durch den kompakten Aufbau der Vorrichtung ergibt sich ein besonders geringer Platzbedarf in der Produktionsstraße, so daß eine Bahnlaufregelung auch nachträglich in eine fertige Straße eingebaut werden kann. Insbesondere bei Papiermaschinen ergibt sich im Naßbereich der besondere Vorteil, daß durch das Verschwenken der Bahnlaufregelwalze um ihren Mittelpunkt keine einseitige Längenänderung der Bahn hervorgerufen wird, die im weiteren Produktionsablauf erheblich stören würde. Die Schwenkachse der Bahnlaufregelwalze verläuft dabei vorzugsweise senkrecht zur Winkelsymmetrieebene zwischen der zur Walze zulaufenden und von ihr ablaufenden Bahn, so daß sich eine besonders geringe Spannkraftänderung der Bahn ergibt. Alternativ kann die Schwenkachse aber auch parallel zur zulaufenden Bahn gewählt werden, was eine maximale Führungswirkung der Bahnlaufregelwalze ergibt.

Alternativ ist es gemäß Anspruch 9 vorteilhaft, die Vorrichtung zur Korrektur einer Spannkraftdifferenz beider Bahnhälften einzusetzen. Dabei wird die Schwenkachse vorzugsweise parallel zur Winkelsymmetrieebene zwischen der zulaufenden und der ablaufenden Bahn oder in Richtung der zulaufenden Bahn gelegt.

Insbesondere bei empfindlichen Bahnen wie im Naßbereich einer Papiermaschine ist es gemäß Anspruch 10 günstig, einer Bahnlaufregelwalze eine Spannkraftausgleichswalze nachzuschalten und für beide Walzen die Verschwenkvorrichtung zu verwenden. Dabei kann die Spannkraftausgleichswalze die von der Bahnlaufregelwalze hervorgerufenen Spannkraftänderungen der Bahn ausgleichen. Durch den kompakten Aufbau der Verschwenkvorrichtungen beider Walzen können diese Walzen sehr dicht aufeinander folgen, so daß Längenänderungen zwischen beiden Bahnkanten vermieden werden.

Alternativ ist es gemäß Anspruch 11 vorteilhaft, die Spannkraftausgleichswalze selbsteinstellend auszubilden. In diesem Fall entfällt bei der Verschwenkvorrichtung der Spannkraftausgleichswalze der Stellantrieb und die drehbare Gewindespindel. Die Spannkraftausgleichswalze wird dann nur durch die Kraft der Bahn verschwenkt.

Weitere Vorteile und Merkmale der vorliegenden Erfindung werden in der folgenden detaillierten Beschreibung anhand der dazugehörigen Figuren dargelegt, in denen mehrere Ausführungsbeispiele der vorliegenden Erfindung enthalten sind. Es sollte jedoch verstanden werden, daß die Zeichnung nur dem Zweck der Darstellung der Erfindung dient und nicht den Schutzbereich der Erfindung beschränkt.

In der Zeichnung bezeichnen gleiche Bezugszeichen stets gleiche Teile.
Es zeigt:
- Figur 1: eine perspektivische Darstellung einer Bahnlaufregelvorrichtung mit einer Vorrichtung zum Verschwenken einer Walze,
- Figur 2: ein stelltriebseitiges Getriebe der Verschwenkvorrichtung,
- Figur 3: ein am Gegenende der Walze vorgesehenes Getriebe der Verschwenkvorrichtung und
- Figur 4: das Getriebe gemäß Figur 3 ohne Zahnrad und ohne Welle.

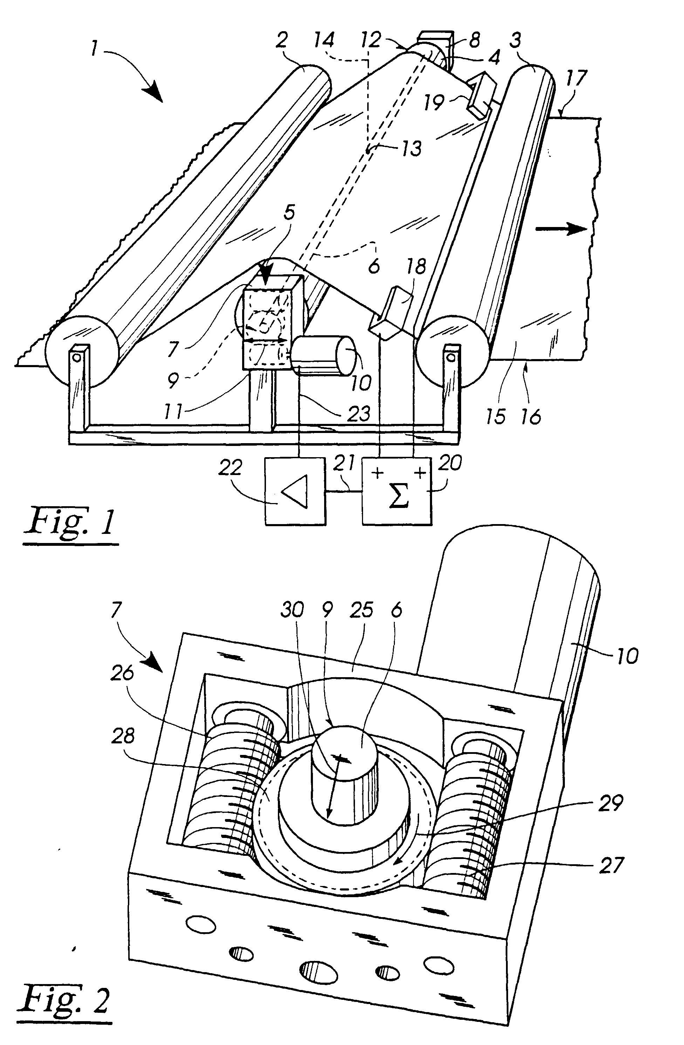

Figur 1 zeigt eine perspektivische Darstellung einer Vorrichtung 1 zur Bahnlaufregelung, bestehend aus zwei drehbar gelagerten Walzen 2, 3, denen eine schwenkbar gelagerte, drehbare Walze 4 zwischengeordnet ist. Zur Verschwenkung der Walze 4 ist eine Vorrichtung 5 vorgesehen, die von einer die Walze durchsetzenden Welle 6 und zwei Getrieben 7, 8 gebildet ist. An den am Ende 9 der Welle 6 angreifenden Getriebe 7 ist ein Stellantrieb 10 gekoppelt. Dieser Stellantrieb 10 versetzt die Welle 6 in Drehung, wobei sich deren Ende 9 in Richtung des Doppelpfeiles 11 verschiebt. Das am Gegenende 12 der Welle 6 vorgesehene Getriebe 8 setzt die Drehbewegung der Welle 6 in eine zum Ende 9 gegensinnige Bewegung des Gegenendes 12 um. Auf diese Weise verschwenkt der Stellantrieb 10 die Welle 6 um eine durch ihren Mittelpunkt 13 verlaufende Schwenkachse 14. Die Walze 4 ist über nicht dargestellte Wälzlager an der Welle 6 abgestützt, so daß die von der Welle 6 ausgeführte Schwenkbewegung auf die Walze 4 übertragen wird.

Die Walzen 2, 3, 4 sind von einer Bahn 15 umschlungen, deren Kanten 16, 17 von Kantenfühlern 18, 19 abgetastet werden. Die Ausgangssignale der Kantenfühler 18, 19 werden einem Summierer 20 zugeführt, der hieraus den Verlauf der Bahnmitte berechnet. Der Summierer 20 ist über einen Signalweg 21 mit einem Regler 22 verbunden, der vorzugsweise ein P-, PI- oder PID-Verhalten aufweist. Der Regler 22 vergleicht den Verlauf der Bahnmitte mit einem Sollwert. Mit dem vom Regler 22 ermittelten Korrektursignal wird über einen Signalweg 23 der Stellantrieb 10 der Schwenkvorrichtung 5 angesteuert, der durch Verschwenken der Walze 4 den Bahnlauf korrigiert.

Der Aufbau und die Funktion der Getriebe 7, 8 wird anhand der Figuren 2 bis 4 näher erläutert. Das Getriebe 7 gemäß Figur 2 besteht aus einem Gehäuseblock 25, an dem der Stellantrieb 10 angeflanscht ist. Im Gehäuseblock 25 sind zwei Gewindespindeln 26, 27 vorgesehen, wobei die Gewindespindel 26 feststeht und die Gewindespindel 27 vom Stellantrieb 10 in Drehung versetzbar ist. Die Gewindespindeln 26, 27 kämmen mit einem Zahnrad 28, das mit der Welle 6 drehfest verbunden ist. Dreht der Stellantrieb 10 die Gewindespindel 27 beispielsweise gegen den Uhrzeigersinn, so wird das Zahnrad 28 in Richtung des Pfeiles 29 verdreht. Da das Zahnrad 28 an der der Gewindespindel 27 gegenüberliegenden Seite mit der Gewindespindel 26 kämmt, muß es sich an dieser abwälzen. Dies führt zu einer Verschiebung des Zahnrades 28 und damit des Wellenendes 9 in Richtung des Pfeiles 30. Das Getriebe 7 sorgt daher für eine vom Stellantrieb 10 hervorgerufene Verdrehung und gleichzeitig Verschiebung des Wellenendes 9.

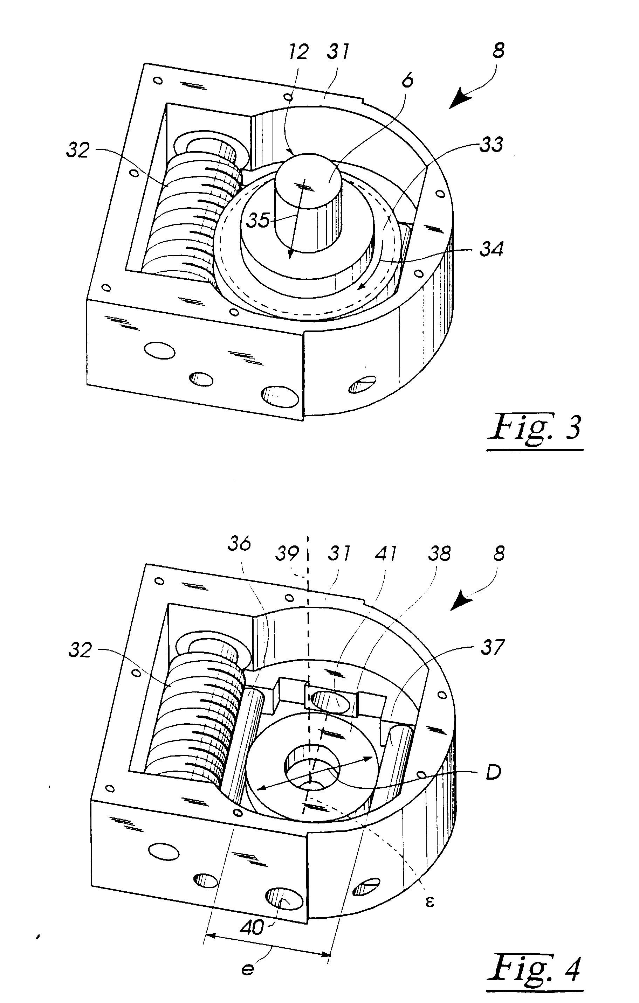

Figur 3 zeigt ein Getriebe 8, das am Gegenende 12 der Welle 6 vorgesehen ist. Es besteht ebenfalls aus einem Gehäuseblock 31, in dem eine feststehende Gewindespindel 32 vorgesehen ist. Diese Gewindespindel 32 kämmt mit einem Zahnrad 33, das drehfest mit der Welle 6 verbunden ist. Dreht sich die Welle 6 mit dem Zahnrad 33 beispielsweise in Richtung des Pfeiles 34, so wird das Wellengegenende 12 in Richtung des Pfeiles 35 verschoben. Auf diese Weise wird erreicht, daß die vom Getriebe 7 gemäß Figur 2 hervorgerufene Drehbewegung der Welle 6 durch das Getriebe 8 in eine Schubbewegung des Gegenendes 12 der Welle 6 übersetzt wird. Die beiden Getriebe 7, 8 sind dabei zueinander so angeordnet, daß die jeweils feststehenden Gewindespindeln 26, 32 einander diagonal gegenüberliegen. Dies hat zur Folge, daß die Bewegungen beider Enden 9, 12 der Welle 6 zueinander gegensinnig gekoppelt sind.

Figur 4 zeigt das Getriebe 8 gemäß Figur 3, wobei das Zahnrad 33 mit der Welle 6 entfernt ist, um die darunterliegenden Teile sehen zu können. Im Gehäuseblock 31 sind im Abstand e zwei Säulen 36, 37 festgelegt, die für die Welle 6 eine Kulissenführung bilden. Die Welle 6 besitzt ein Wälzlager 38, das zwischen den Säulen 36, 37 läuft. Dabei ist der Abstand e zwischen den Säulen geringfügig größer als der Außendurchmesser D des Wälzlagers 38. Dadurch wird erreicht, daß das Wälzlager 38 nur an einer der beiden Säulen 36, 37 anliegt und sich daran ohne zu gleiten abwälzt. Die Kulissenführung bewirkt, daß sich die Welle 6 nur innerhalb einer Ebene ε bewegen kann. Dies stellt sicher, daß eine Achse 39 der Welle 6 stets von der Gewindespindel 32 gleich weit beabstandet ist, so daß die Verzahnungen der Gewindespindel 32 und des Zahnrades 33 korrekt ineinander eingreifen. Dies ist wichtig, damit sich die Zähne des Zahnrades 33 an der Gewindespindel 32 ohne zu gleiten abwälzen.

Im Gehäuseblock 31 sind in der Bewegungsebene des Wälzlagers 38 Durchgangsbohrungen 40, 41 vorgesehen, in denen nicht dargestellte Anschläge zur beidseitigen Begrenzung des Stellwegs der Welle 6 vorgesehen sind. Zusätzlich könnte in einer der Durchgangsbohrungen 40, 41 ein Stoßdämpfer vorgesehen sein, der Schwingungsbewegungen der Welle 6 dämpft.

Die Kulissenlagerung der Welle 6 im Getriebe 8 ist in gleicher Weise auch im Getriebe 7 gemäß Figur 2 vorgesehen. Zwar ist eine Verschiebung des Zahnrades 28 senkrecht zu den Gewindespindeln 26, 27 aufgrund des Eingriffs dieser Gewindespindeln 26, 27 von beiden Seiten des Zahnrades 28 bereits unterbunden, jedoch verhindert die Kulissenführung in diesem Getriebe 7 eine Erhöhung der Zahnreibung durch geringe Abstandsschwankungen der Welle 6 von den Gewindespindeln 26, 27.

Da einige Ausführungsbeispiele der vorliegenden Erfindung nicht gezeigt bzw. beschrieben sind, ist zu verstehen, daß eine Vielzahl von Änderungen und Abwandlungen dieser beschriebenen Ausführungsbeispiele möglich ist, ohne den wesentlichen Gedanken und den Schutzbereich der Erfindung zu verlassen, der durch die Ansprüche festgelegt ist.

### Bezugszeichenliste

- 1: Vorrichtung zur Bahnlaufregelung
- 2, 3: Walze
- 4: schwenkbare Walze
- 5: Vorrichtung
- 6: Welle
- 7, 8: Getriebe
- 9: Ende
- 10: Stellantrieb
- 11: Doppelpfeil
- 12: Gegenende
- 13: Mittelpunkt
- 14: Schwenkachse
- 15: Bahn
- 16, 17: Kante
- 18, 19: Kantenfühler
- 20: Summierer
- 21: Signalweg
- 22: Regler
- 23: Signalweg
- 25: Gehäuseblock
- 26, 27: Gewindespindel
- 28: Zahnrad
- 29, 30: Pfeil
- 31: Gehäuseblock
- 32: Gewindespindel
- 33: Zahnrad
- 34, 35: Pfeil
- 36, 37: Säule
- 38: Wälzlager
- 39: Achse
- 40, 41: Durchgangsbohrung

## Patentansprüche

1. Vorrichtung zum Verschwenken einer von einer Welle (6) durchsetzten und auf dieser gelagerten Walze (4) für eine laufende Bahn (15), insbesondere eine Papier- oder Folienbahn, mit einem an einem Wellenende (9) angreifenden und beide Wellenenden (9, 12) gegensinnig verstellenden Stellantrieb (10), **dadurch gekennzeichnet**, daß die Welle (6) vom Stellantrieb (10) um ihre Längsachse in Drehung versetzbar und an ihren Enden (9, 12) in Getrieben (7, 8) gehalten ist, die die Drehbewegung in eine Schwenkbewegung der Welle (6) übertragen.

2. Vorrichtung nach Anspruch 1, **dadurch gekennzeichnet,** daß mindestens eines der Getriebe (7, 8) ein Zahngetriebe ist.

3. Vorrichtung nach Anspruch 1 oder 2, **dadurch gekennzeichnet,** daß die Welle (6) mit dem Stellantrieb (10) über das stellantriebseitige Getriebe (7) gekoppelt ist.

4. Vorrichtung nach mindestens einem der Ansprüche 1 bis 3, **dadurch gekennzeichnet**, daß die Welle (6) im Bereich ihres Endes (9) mit einem Zahnrad (28) drehfest verbunden ist, an das der Stellantrieb (10) angreift.

5. Vorrichtung nach Anspruch 4, **dadurch gekennzeichnet**, daß das Zahnrad (28) einerseits mit einer feststehenden Gewindespindel (26) oder Zahnstange und andererseits mit einer mit dem Stellantrieb (10) gekoppelten Gewindespindel (27) kämmt.

6. Vorrichtung nach Anspruch 1 oder 5, **dadurch gekennzeichnet**, daß das am Wellengegenende (12) angreifende Getriebe (8) von einem drehfest mit der Welle (6) verbundenen Zahnrad (33) gebildet ist, das mit einer feststehenden Gewindespindel (32) oder Zahnstange kämmt, welche der am Walzenende (9) vorgesehenen feststehenden Gewindespindel (26) oder Zahnstange diagonal gegenüberliegt.

7. Vorrichtung nach mindestens einem der Ansprüche 1 bis 6, **dadurch gekennzeichnet**, daß die Welle (6) wenigstens ein an einer Kulisse (36, 37) abgestütztes Wälzlager (38) aufweist.

8. Verwendung der Vorrichtung nach mindestens einem der Ansprüche 1 bis 7 zur Korrektur eines seitlichen Bahnverlaufs durch Erfassen und Regeln der Bahnkante (16, 17), wobei die Regelung auf den am Wellenende (9) angreifenden Stellantrieb (10) einwirkt.

9. Verwendung der Vorrichtung nach mindestens einem der Ansprüche 1 bis 7 zur Korrektur einer Spannkraftdifferenz beider Bahnhälften, durch Erfassen und Regeln der Spannkraftdifferenz, wobei die Regelung auf den am Wellenende angreifenden Stellantrieb einwirkt.

10. Verwendung der Vorrichtung nach mindestens einem der Ansprüche 1 bis 7 von zwei aufeinanderfolgenden Walzen (4) zur Korrektur des seitlichen Bahnverlaufs und der durch die Verschwenkung der Bahnlaufregelwalze (4) hervorgerufenen Spannkraftdifferenz beider Bahnhälften durch Erfassen und Regeln der Bahnkante (16, 17) unter Einwirkung auf den Stellantrieb (10) der Bahnlaufregelwalze (4) und durch Erfassen und Regeln der Spannkraftdifferenz unter Einwirkung auf den Stellantrieb der Spannkraftausgleichswalze.

11. Verwendung der Vorrichtung nach mindestens einem der Ansprüche 1 bis 7 von zwei aufeinanderfolgenden Walzen (4) zur Korrektur des seitlichen Bahnverlaufs und der durch die Verschwenkung der Bahnlaufregelwalze (4) hervorgerufenen Spannkraftdifferenz beider Bahnhälften durch Erfassen und Regeln der Bahnkante (16, 17) unter Einwirkung auf den Stellantrieb (10) der Bahnlaufregelwalze (4) und durch Verschwenken der Spannkraftausgleichswalze durch die Kraft der Bahn (15).

## Claims

1. Device for pivoting a roll (4) which is mounted on a shaft (6) that passes through it, for a moving web (15), in particular a web of paper or film, having an actuating drive (10) that acts on one end (9) of the shaft and adjusts the two ends (9, 12) of the shaft in opposite directions, characterized in that the shaft (6) can be set rotating about its longitudinal axis by the actuating drive (10) and, at its ends (9, 12), is held in transmissions (7, 8) which transform the rotary movement into a pivoting movement of the shaft (6).

2. Device according to Claim 1, characterized in that at least one of the transmissions (7, 8) is a toothed gear transmission.

3. Device according to Claim 1 or 2, characterized in that the shaft (6) is coupled to the actuating drive (10) via the transmission (7) on the actuating-drive side.

4. Device according to at least one of Claims 1 to 3, characterized in that, in the area of its end (9), the shaft (6) is connected to a gearwheel (28) so as to rotate with it, on which gearwheel the actuating drive (10) acts.

5. Device according to Claim 4, characterized in that the gearwheel (28) meshes on one side with a stationary threaded spindle (26) or rack and on the other side with a threaded spindle (27) that is coupled to the actuating drive (10).

6. Device according to Claim 1 or 5, characterized in that the transmission (8) that acts on the opposite end (12) of the shaft is formed by a gearwheel (33) which is connected to the shaft (6) so as to rotate with it and meshes with a stationary threaded spindle (32) or rack, which is located diagonally opposite the stationary threaded spindle (26) or rack provided at the end (9) of the shaft.

7. Device according to at least one of Claims 1 to 6, characterized in that the shaft (6) has at least one rolling-contact bearing (38) supported on a slotted guide (36, 37).

8. Use of the device according to at least one of Claims 1 to 7 to correct a lateral web run by detecting and controlling the edge (16, 17) of the web, the control acting on the actuating drive (10) that acts on the end (9) of the shaft.

9. Use of the device according to at least one of Claims 1 to 7 to correct a difference in tension between the two halves of the web by detecting and controlling the difference in tension, the control acting on the actuating drive that acts on the end of the shaft.

10. Use of the device according to at least one of Claims 1 to 7 of two successive rolls (4) to correct the lateral web run and the difference in tension between the two halves of the web, brought about by pivoting the web-run control roll (4), by detecting and controlling the edge (16, 17) of the web by acting on the actuating drive (10) of the web-run control roll (4) and by detecting and controlling the difference in tension by acting on the actuating drive of the tension balancing roll.

11. Use of the device according to at least one of Claims 1 to 7 of two successive rolls (4) to correct the lateral web run and the difference in tension between the two halves of the web, brought about by pivoting the web-run-control roll (4), by detecting and controlling the edge (16, 17) of the web by acting on the actuating drive (10) of the web-run control roll (4) and by pivoting the tension balancing roll by means of the force of the web (15).

## Revendications

1. Dispositif servant au pivotement d'un rouleau (4), traversé par un arbre (6) et monté sur ce dernier, pour une bande en mouvement (15), en particulier une bande de papier ou de feuille, avec un servomoteur (10) attaquant une extrémité (9) de l'arbre et déplaçant en sens contraire les deux extrémités (9, 12) de l'arbre, caractérisé en ce que l'arbre (6) est mis en rotation autour de son axe longitudinal par le servomoteur (10) et est maintenu sur ses extrémités (9, 12) dans des transmissions (7, 8), qui transforment le mouvement de rotation en un mouvement de pivotement de l'arbre (6).

2. Dispositif suivant la revendication 1, caractérisé en ce qu'au moins l'une des transmissions (7, 8) est une transmission dentée.

3. Dispositif suivant l'une des revendications 1 et 2, caractérisé en ce que l'arbre (6) est couplé au servomoteur (10) par l'intermédiaire de la transmission (7) côté servomoteur.

4. Dispositif suivant l'une au moins des revendications 1 à 3, caractérisé en ce que l'arbre (6) est assemblé de façon solidaire, dans la zone de son extrémité (9), avec une roue dentée (28) qu'attaque le servomoteur (10).

5. Dispositif suivant la revendication 4, caractérisé en ce que la roue dentée (28) engrène d'une part avec une broche filetée (26) ou une crémaillère stationnaire, et d'autre part avec une broche filetée (27) couplée au servomoteur (10).

6. Dispositif suivant l'une des revendications 1 et 5, caractérisé en ce que la transmission (8), attaquant la contre-extrémité (12) de l'arbre, est formée par une roue dentée (33), assemblée de façon solidaire avec l'arbre (6) et engrenant avec une broche filetée (32) ou une crémaillère stationnaire, qui est diagonalement opposée à la broche filetée (26) ou crémaillère stationnaire prévue sur l'extrémité (9) de l'arbre.

7. Dispositif suivant l'une au moins des revendications 1 à 6, caractérisé en ce que l'arbre (6) présente au moins un palier à roulement (38) supporté sur une coulisse (36, 37).

8. Utilisation du dispositif suivant l'une au moins des revendications 1 à 7 pour la correction d'un déport latéral de bande par détection et réglage de la lisière de bande (16, 17), la régulation agissant sur le servomoteur (10) qui attaque l'extrémité (9) de l'arbre.

9. Utilisation du dispositif suivant l'une au moins des revendications 1 à 7 pour la correction d'une différence d'effort de tension des deux moitiés de bande, par détection et réglage de la différence d'effort de tension, la régulation agissant sur le servomoteur qui attaque l'extrémité de l'arbre.

10. Utilisation du dispositif suivant l'une au moins des revendications 1 à 7, comprenant deux rouleaux (4) successifs, pour la correction du déport latéral de la bande et de la différence d'effort de tension des deux moitiés de bande provoquée par le pivotement du rouleau de régulation (4) du mouvement de la bande, par détection et réglage de la lisière de bande (16, 17) sous l'effet du rouleau de régulation (4) du mouvement de la bande sur le servomoteur (10), et par détection et réglage de la différence d'effort de tension sous l'effet du rouleau de compensation de l'effort de tension sur le servomoteur.

11. Utilisation du dispositif suivant l'une au moins des revendications 1 à 7, comprenant deux rouleaux successifs (4), pour la correction du déport latéral de la bande et de la différence d'effort de tension des deux moitiés de bande provoquée par le pivotement du rouleau de régulation (4) du mouvement de la bande, par détection et réglage de la lisière de bande (16, 17) sous l'effet du rouleau de régulation (4) du mouvement de la bande sur le servomoteur (10), et par pivotement du rouleau de compensation de l'effort de tension sous l'effet de la force de la bande (15).
